# FASCICULE DE BREVET EUROPEEN

(11) **EP 2 475 488 B1**
(45) Date de publication et mention de la délivrance du brevet: **21.03.2018**
(21) Numéro de dépôt: 10757748.8
(22) Date de dépôt: 10.09.2010
(51) Int. Cl.: B23K 1/008, B23K 3/08

(54) **PROCEDE D'ASSEMBLAGE POUR BRASAGE**
VERFAHREN ZUM AUFBAUEN VON WERKSTÜCKEN ZUM HARTLÖTEN
METHOD OF ASSEMBLING WORKPIECES FOR BRAZING

(30) Priorité: 10.09.2009 FR 0956219
(43) Date de publication de la demande: 18.07.2012
(73) Titulaire: Commissariat à l'Énergie Atomique et aux Énergies Alternatives, 75015 Paris (FR)
(72) Inventeur: BERTRAND, Bernard, F-04100 Manosque (FR); GUILHEM, Dominique, F-13090 Aix en Provence (FR); LIPA, Manfred, D-83700 Rottach-Egern (DE)
(74) Mandataire: Lebkiri, Alexandre
(86) Numéro de dépôt international: PCT/EP2010/063323
(87) Numéro de publication internationale: WO 2011/029907

(56) Documents cités:
- WO-A1-02/066200
- WO-A1-2005/046921
- DE-A1- 4 412 792
- JP-A- 60 087 968
- US-A- 3 047 710
- US-A- 3 202 792

## Description

L'invention porte sur un procédé d'assemblage par brasage. Plus particulièrement, l'invention porte sur un procédé d'assemblage par brasage d'éléments de grande dimension, par exemple destinés à former des antennes radiofréquences. A titre d'exemple, dans le cadre de la recherche sur la fusion thermonucléaire contrôlée par confinement magnétique, il est nécessaire de pouvoir générer un courant continu dans le plasma d'un tokamak. Une des méthodes employée consiste à injecter des ondes à la fréquence hybride inférieure de 3,7 GHz au sein du plasma, améliorant ainsi les conditions de création d'un plasma de fusion nucléaire. Pour ce faire, il est envisagé de pouvoir injecter à l'aide de deux antennes radiofréquences une puissance de 8 MW sur une durée de plusieurs centaines de seconde voire même 1000 secondes.

Les antennes radiofréquences comportent une série de guides d'ondes, chaque guide d'ondes étant usiné dans la partie en cuivre d'un empilement alterné (bicouches ou tri-couches) de plaques de cuivre et d'inox, les plaques formant l'empilement étant liées entre elles par explosion.

Les plaques bi-matériaux résultant de ce procédé d'assemblage par explosion sont ensuite empilées et liées entre elles par brasage à haute température. Lors de l'assemblage des guides d'ondes, une pluralité de plaques tri-couches est emprisonnée au sein de deux plaques bicouches d'extrémité.

Un feuillard intercalaire de brasure en alliage de cuivre est disposé entre deux plaques bi-matériaux, bicouches ou tricouches. L'ensemble, plaques et feuillards de brasure, est inséré dans un four sous vide pouvant atteindre une température avoisinant les 900 °C.

Lorsque la température du four atteint la température de fusion des feuillards de brasure, les plaques bi-matériaux, bicouches ou tricouches, se soudent entre elles.

Pour assurer une liaison uniforme des plaques au cours du cycle de brasage, une force de compression uniforme doit être exercée sur toute la surface à braser afin d'éviter toute déformation des plaques au cours de la montée en température. De telles déformations génèreraient des pertes de contact des plaques avec le feuillard de brasure et conduiraient à des défauts de brasure.

Le procédé le plus classique d'assemblage par brasage consiste à exercer une pression mécanique sur la surface des plaques au moyen de tirants. Les tirants utilisés pour exercer la force de compression sur l'ensemble des plaques lors de la fonte du feuillard de brasure, sont généralement réalisés dans un matériau réfractaire de type molybdène ou inconel™. Ces matériaux possèdent des propriétés intéressantes à haute température pour ce type d'application (bonnes caractéristiques mécaniques, tenue au fluage). Le molybdène possède en outre un coefficient de dilatation thermique relativement faible comparé à celui de l'inox et du cuivre utilisé dans la réalisation des antennes radiofréquences, Dans cette réalisation, on peut tirer profit des différences de coefficient de dilatation pour assurer un serrage des plaques à chaud. Cette solution utilisant des tirants présente cependant certains inconvénients.

En effet, compte tenu de la masse de l'ensemble à braser, le cycle de brasage peut durer plusieurs jours, voire une semaine. Une telle durée est liée à la masse et à la géométrie de l'ensemble à braser. Elle est calculée de façon à limiter les gradients thermiques pouvant se produire à l'intérieur de la pièce au cours du cycle thermique de brasage.

La montée en température du four entraîne une dilatation thermique et une déformation de l'ensemble des plaques bi-matériaux, bicouches ou tricouches, et des tirants. Même si les coefficients de dilatation des différents matériaux utilisés sont connus, avec plus ou moins de précision, on constate certains écarts surtout à chaud. On ne peut donc pas garantir que la pression mécanique exercée sur l'ensemble des plaques bi-matériaux, bicouches ou tricouches, soit existante ou suffisante pour s'opposer à toutes les déformations qui peuvent apparaître au cours du cycle de brasage. La brasure elle-même ne nécessite qu'une pression réduite (0,05 bars) mais cette pression est toutefois nécessaire. L'importance du serrage (pression mécanique d'environ 20 bars) vise surtout à éviter toute déformation des plaques qui ferait chuter localement cette pression. De telles déformations sont liées au relâchement des contraintes internes et des tolérances de fabrication ainsi qu'aux flexions par effet bilame (cuivre/inox). Ces déformations qui se déroulent au cours du cycle de brasage, si elles ne sont pas maîtrisées, génèrent des défauts de brasage, se traduisant par des liaisons non uniformes entre deux plaques adjacentes. Ce type de défauts génère, lorsque les plaques sont traversées par des ondes hautes fréquence, des pertes locales. Ces pertes sont susceptibles de créer des points chauds et des amorçages d'arcs électriques entraînant à terme la dégradation des plaques.

En outre, lorsque les feuillards intercalaires de brasure change d'état, autrement dit lorsque la température du four avoisine la température de fusion de ces derniers, par exemple 780°C, une réduction de l'épaisseur de l'ensemble des plaques et des feuillards de brasure se produit. Cette réduction génère une diminution de la pression mécanique exercée sur les plaques entraînant ainsi des défauts de brasure.

Un deuxième procédé applicable consiste à exercer une pression mécanique au moyen de ressorts métalliques. Ce type de mise en oeuvre entraîne à haute température, un affaiblissement des caractéristiques des ressorts et une perte du serrage.

Un troisième procédé applicable consiste à exercer une pression mécanique au moyen d'une masse inerte placée au dessus de l'ensemble des plaques à braser quand cela est possible. Dans notre application, une telle mise en oeuvre nécessite l'utilisation de four de grande dimension de façon à pouvoir y introduire la masse inerte importante. De ce fait, un tel procédé est applicable uniquement pour le brasage d'élément de petite dimension.

Enfin le document DE-A-4412792 décrit un procédé d'assemblage par brasage dans lequel les pièces sont placées dans une enceinte déformable. Lors du brasage, on abaisse la pression dans l'enceinte, qui se déforme alors sous l'effet de la pression extérieure pour exercer une pression sur les pièces. Dans ce contexte, l'invention vise à proposer un procédé d'assemblage par brasage permettant de réaliser de façon certaine des brasures de meilleure qualité que celles obtenues par les procédés précités.

A cette fin, l'invention porte sur un procédé d'assemblage par brasage selon la revendication 1. On entend par régulation à distance le fait de réguler la pression mécanique au moyen d'un système de commande situé à l'extérieur du four.

Grâce à l'invention, une pression mécanique régulable, c'est-à-dire contrôlable et pilotable à distance est exercée via un dispositif pressurisable au moyen d'un fluide sur au moins une partie d'un ensemble de plaques à braser. La pression mécanique est obtenue sous l'effet de la déformation du dispositif pressurisable. Ce dispositif pressurisable au moyen d'un fluide est préférentiellement un soufflet pressurisable au moyen d'un gaz. Une telle mise en oeuvre permet de palier une quelconque augmentation ou diminution de la pression mécanique qui serait due :
- aux dilatations différentielles importantes apparaissant au cours du cycle de brasage entre les plaques à braser et d'éventuels moyens de compression (tirants, ressorts,...);
- à un affaissement des plaques et du matériau d'apport, l'affaissement pouvant être généré par le changement d'état du matériau d'apport lorsque la température du four avoisine la température du point de fusion du matériau d'apport.

En outre, cette pression mécanique est régulée en fonction de la température du four. La pression mécanique exercée sur les plaques à braser peut en particulier être pilotée et régulée tout au long du cycle de brasure, même à haute température.

Outre les caractéristiques principales qui viennent d'être mentionnées dans le paragraphe précédent, le procédé d'assemblage par brasage selon l'invention peut présenter une ou plusieurs caractéristiques supplémentaires ci-dessous, considérées individuellement ou selon toutes les combinaisons techniquement possibles :
- le dispositif pressurisable est un soufflet ;
- ledit fluide est un gaz ;
- la pression mécanique exercée sur la surface de l'une des deux plaques par le dispositif pressurisable est obtenue par la présence d'une quantité initiale de gaz au sein du dispositif pressurisable, la pression mécanique exercée augmentant avec la température dans le four et étant régulée par introduction ou retrait de gaz par rapport à la quantité initiale au sein du dispositif pressurisable ;
- le cycle de brasage comporte :
   ∘ une augmentation de la température jusqu'à la température de brasage, l'augmentation de température entraînant une augmentation de la pression mécanique exercée par le dispositif pressurisable comportant une quantité de gaz initiale constante lors de l'augmentation de température au sein du four puis ;
   ∘ une diminution de la température, la pression mécanique exercée par le dispositif pressurisable étant maintenue sensiblement constante par introduction de gaz supplémentaire au cours du refroidissement ;
- la pression mécanique est exercée sur un empilement de plaques séparées les une des autres par un matériau d'apport, l'empilement comportant une plaque supérieure, une plaque inférieure et au moins une plaque (matériau d'apport) située entre la plaque supérieure et la plaque inférieure, la pression mécanique étant exercée par le dispositif pressurisable sur la surface supérieure de la plaque supérieure ou sur la surface inférieure de la plaque inférieure ;
- la pression mécanique qu'exerce chaque dispositif pressurisable de la pluralité de dispositifs pressurisables est régulée de façon indépendante de la pression mécanique exercée par le ou les autres dispositifs pressurisables ;
- le dispositif pressurisable exerce une pression mécanique maximale sensiblement égale à 6 bars ;
- les deux plaques séparées par le matériau d'apport ont une surface supérieure ou égale à 500 cm² et de préférence sensiblement égale à 1000 cm².

D'autres caractéristiques et avantages de l'invention ressortiront clairement de la description qui en est donnée ci-dessous, à titre indicatif et nullement limitatif, de modes de réalisation faisant référence aux figures annexées ci-jointes, sur lesquelles :
- la figure 1 représente une installation pour la mise en oeuvre d'un procédé d'assemblage par brasage conforme à l'invention,
- la figure 2 représente un exemple de mise en oeuvre des étapes du procédé d'assemblage par brasage conforme à l'invention,
- la figure 3 représente une courbe illustrant la pression exercée au sein d'un soufflet en fonction de la température.

Pour des raisons de clarté, seuls les éléments utiles pour la compréhension de l'invention ont été représentés, et ceci sans respect de l'échelle et de manière schématique.

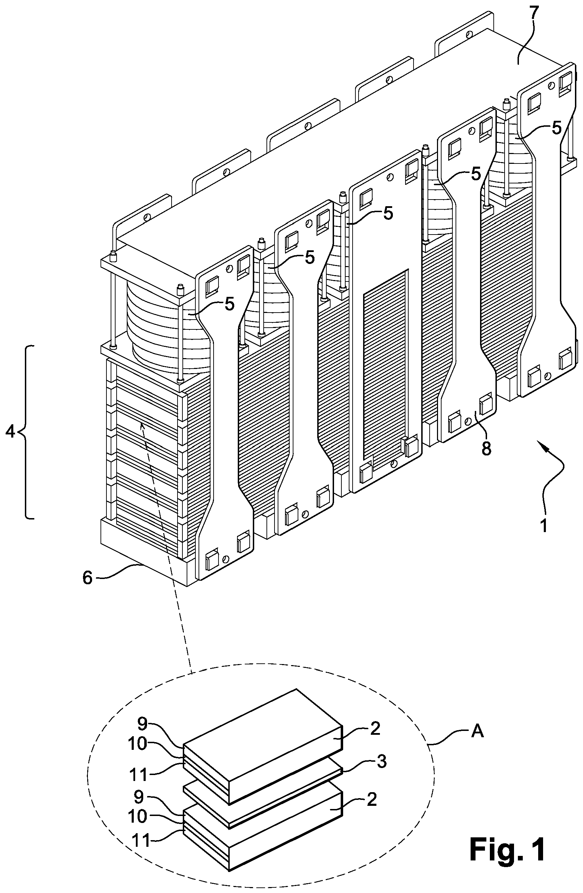

La figure 1 illustre de façon schématique une installation 1 pour la mise en oeuvre d'un procédé d'assemblage par brasage conforme à l'invention.

L'installation 1 comporte :
- un plateau inférieur 6,
- un plateau supérieur 7,
- des tirants 8,
- une série de soufflets 5 (ici cinq soufflets 5 sont représentés).

L'installation 1 comporte en outre une nappe 4 formée par un empilement de plaques 2 séparées les unes des autres par un matériau d'apport 3.

Un agrandissement A de deux plaques 2 séparées par un matériau d'apport 3 de brasure, que comporte la nappe 4 est en outre représenté sur la figure 1. A titre d'exemple, les deux plaques 2 représentées sont ici des plaques tri-couches, une couche supérieure 9, une couche intermédiaire 10 et une couche inférieure 11. Les couches supérieure 9 et inférieure 11 sont par exemple des plaques de cuivre et la couche intermédiaire 10 est par exemple une couche d'inox. Les trois couches 9, 10, 11 sont assemblées par explosion.

On notera que la nappe 4 peut comporter deux plaques bicouches non représentées (cuivre-inox) à ses extrémités et une pluralité de plaques 2 tri-couches (cuivre/inox/cuivre) entre les deux plaques bicouches d'extrémité.

Le matériau d'apport 3 inséré entre les plaques 2 peut, par exemple, être formé par un feuillard de brasure en alliage de cuivre d'une épaisseur de 39 µm. Le point de fusion de ce matériau d'apport 3 peut être typiquement compris entre 780 et 900°C.

La nappe 4 est positionnée entre la surface supérieure du plateau inférieur 6 et la surface inférieure des soufflets 5. En d'autres termes, les soufflets 5 sont répartis sur la surface de la plaque supérieure 2 sur laquelle chaque soufflet 5 exerce une pression mécanique locale.

L'installation 1 est disposée à l'intérieur d'un four de brasage non représenté.

A titre d'exemple non limitatif, le matériau des soufflets 5 est un alliage de nickel de type Incoloy™ 800 possédant des propriétés mécaniques telles qu'une résistance au fluage et une résistance à la fatigue très élevées à haute température. Les soufflets 5 sont des soufflets à ondes, ces derniers pouvant comporter par exemple dix ondes. De façon générale, le nombre d'ondes dépend des propriétés physiques du matériau et de la course utile en cours d'utilisation comme par exemple 10 mm. En outre, les soufflets 5 comportent 5 parois concentriques d'épaisseur 1 mm. Plus particulièrement, la paroi interne des soufflets 5 sert de contenant étanche de façon à pouvoir contenir un gaz pressurisé. Les quatre parois supplémentaires, non étanches, permettent d'assurer la tenue mécanique des soufflets 5.

Les soufflets 5 possèdent par exemple un diamètre extérieur de 320 mm, un diamètre intérieur de 272 mm et une hauteur de 280 mm. Ces derniers peuvent être pressurisés jusqu'à 6 bars pour une température avoisinant 900°C. Il est entendu que cette pression est donnée ici à titre d'exemple et qu'elle peut être inférieure ou supérieure. La pression des soufflets 5 dépend des matériaux que les soufflets 5 compriment. En effet, la limite de la pression mécanique exercée par les soufflets 5 sur les plaques 2 dépend de la plasticité du matériau des plaques 2. De façon à ne pas créer de déformations irréversibles des plaques 2, la pression mécanique exercée par les soufflets 5 sur la nappe 4 ne doit pas entraîner une déformation plastique des matériaux de la nappe 4.

La pression dans chacun des soufflets 5 est régulée par des moyens non représentés. Ces moyens de régulation de la pression de chacun des soufflets 5 comportent :
- des moyens pour introduire du gaz au sein des soufflets 5 pour augmenter la pression dans ces derniers,
- des moyens de retrait du gaz des soufflets 5 pour diminuer la pression dans ces derniers.

Pour ce faire, les moyens de régulation sont, à titre purement illustratif, munis de vannes, du type quart de tour (deux vannes pour chaque soufflet 5), de soupapes tarées (une soupape par soufflet 5) et de détendeurs de précision équipés de manomètres permettant la mesure de pression aval. Tous ces éléments, non représentés, permettent une régulation de la pression des soufflets 5 en introduisant ou en retirant du gaz La pression de chaque soufflet 5 est régulée de façon indépendante.

On notera que les moyens de régulation sont situés à l'extérieur du four, à la température ambiante et accessible à un operateur et ne sont donc jamais soumis à la température du four (850°C maximum dans l'exemple décrit ci-dessous). Ces moyens de régulation sont donc utilisables quelle que soit la température maximale de brasage.

De manière générale, les moyens de régulation permettent de réguler la pression qui est exercée à l'intérieur de chacun des cinq soufflets 5 et de ce fait la pression mécanique qui est exercée par les cinq soufflets 5 sur la nappe 4. Chacun des soufflets 5 pressurisés est piloté indépendamment des autres soufflets 5.

Les soufflets 5 sont déformables ; ils possèdent une course axiale de ± 10 mm. Une telle caractéristique permet d'assurer un contact permanent entre la nappe 4 et les soufflets 5.

A titre d'exemple non limitatif, le gaz qui est utilisé pour pressuriser les soufflets 5 est de l'argon.

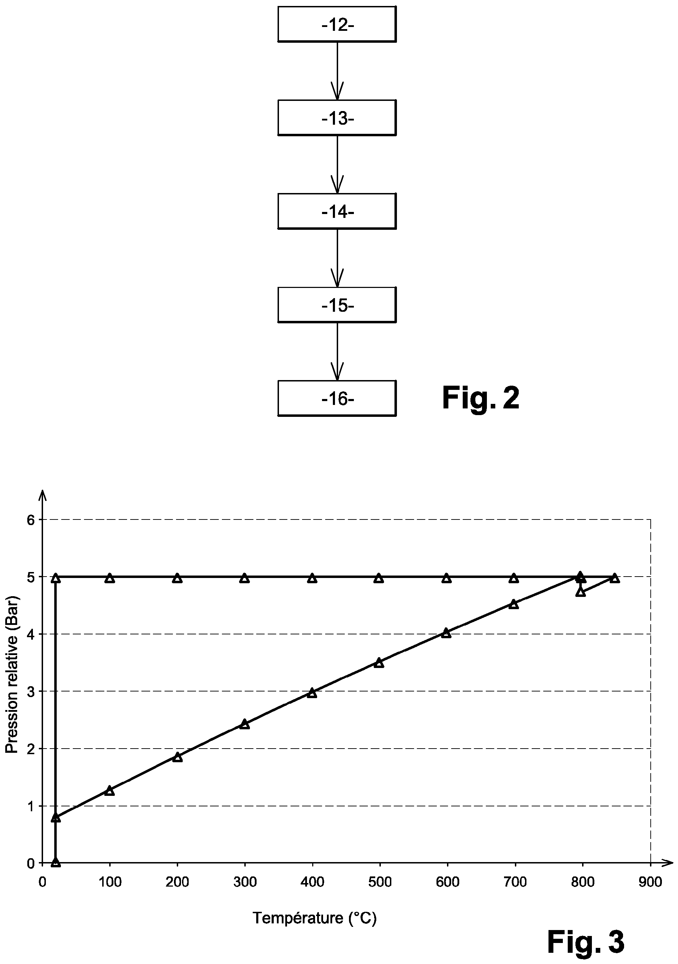

Le procédé d'assemblage par brasage conforme à l'invention et utilisant une installation telle que celle représentée en figure 1 est à présent décrit à la lumière de la figure 2.

Une première étape 12 consiste à positionner la nappe 4 dans un cadre formé par le plateau inférieur 6, le plateau supérieur 7, les tirants 8 et les soufflets 5. Il est à noter que les tirants 8, en inconel, possèdent une section importante de façon à limiter les contraintes et le fluage à chaud.

Une seconde étape 13 consiste à comprimer la nappe 4 au moyen des cinq soufflets 5 qui exercent une pression mécanique sur la surface supérieure de la plaque supérieure de la nappe 4. Pour ce faire, les moyens de régulation introduisent une quantité initiale de gaz à l'intérieur des soufflets 5. Les soufflets 5 sont à titre d'exemple pressurisés à 0,8 bar de pression initiale relative.

Une troisième étape 14 consiste à positionner l'ensemble comportant notamment la nappe 4 comprimée par les cinq soufflets 5 au sein du four.

En outre, il convient de noter que pour réaliser des brasures dans de bonnes conditions, il faut respecter un cycle de brasage prédéfini.

Ainsi, une quatrième étape 15 du procédé de brasage conforme à l'invention consiste à augmenter la température du four pour atteindre la température de brasage.

Puis, une cinquième étape 16 du procédé de brasage conforme à l'invention consiste à diminuer la température du four et à introduire au fur et à mesure, du gaz à l'intérieur des soufflets 5 pour maintenir constante la pression mécanique exercée par les soufflets 5 sur la nappe 4.

La quatrième étape 15 et la cinquième étape 16 sont décrites de façon plus détaillée à la lumière de la figure 3.

Il convient de noter que lorsque la température du four augmente, la température du gaz se trouvant à l'intérieur des soufflets 5 augmente générant une augmentation de la pression par dilatation du gaz dans un volume constant (la quantité de gaz initiale étant maintenue constante).

Tel qu'illustré sur la figure 3, chaque soufflet 5 est pressurisé à 0, 8 bar. Cette pressurisation est effectuée, au cours de l'une des étapes 12 à 14, par les moyens de régulation en introduisant à température ambiante le gaz à l'intérieur des soufflets 5.

Puis en conformité avec l'étape 15, lorsque la température du four est augmentée, la pression de chaque soufflet 5 augmente. De ce fait, la pression mécanique exercée par les soufflets 5 sur la nappe 4 augmente également.

Une telle augmentation de la pression permet d'obtenir une pression mécanique suffisante lorsque la température de fusion de la brasure est atteinte et permet ainsi d'assurer une brasure uniforme sur la surface des plaques 2 que comporte la nappe 4.

Lorsque la température atteint 780°C, c'est-à-dire la température correspondant au point de fusion du matériau d'apport 3, la pression au sein des soufflets 5 est de 5 bars. Ainsi, à titre purement illustratif, si la nappe 4 possède, dans notre application, une surface de brasage de 1000 cm² et que les cinq soufflets 5 sont pressurisés à 5 bars relatifs, la pression exercée sur la nappe 4 est de 195 KN.

Lorsque le matériau d'apport se liquéfie, la nappe 4 peut s'effondrer de quelques millimètres. La course axiale de ± 10 mm des soufflets 5 permet de compenser ce phénomène sans que la pression mécanique qu'exercent les soufflets 5 sur la nappe 4 diminue significativement. Cette situation est représentée sur la figure 3. En effet, lorsque la température du four atteint 780°C, le matériau d'apport 3 se liquéfie et la pression mécanique exercée par les soufflets 5 sur la nappe 4 diminue. Les soufflets 5 se détendent et la température du four continue à augmenter (jusqu'à environ 850 °C) de façon à ce que l'expansion du gaz au sein des soufflets 5 permette d'exercer une pression mécanique de 5 bars correspondant à la pression mécanique exercée à 780 °C.

De façon générale, il est à noter que la course axiale de ± 10 mm des soufflets 5 permet de prendre en compte un effondrement de la nappe 4 et permet en outre de prendre en compte les dilatations différentielles importantes apparaissant au cours du cycle de brasage entre les plaques 2 à braser et le cadre.

Puis, en conformité avec l'étape 16, du gaz est introduit (i.e. on augmente la quantité de gaz par rapport à la quantité initiale de gaz) à l'intérieur des soufflets 5 par les moyens de régulation lorsque la température du four diminue. Cette introduction de gaz permet de palier la diminution de la pression du gaz due à la baisse de la température. Ainsi, la pression mécanique exercée par les soufflets 5 sur la nappe 4 reste constante lors de la diminution de la température du four jusqu'à la température ambiante. Une telle mise en oeuvre permet de maintenir constante la pression mécanique exercée sur la nappe 4.

A noter que pour éviter tout déplacement relatif des plaques 2, séparées les unes des autres par le matériau d'apport 3, elles sont immobilisées en translation au moyen de pions non représentés.

Le cycle de brasage décrit ci-dessus est décrit à titre d'exemple non limitatif et il est entendu que différents cycles de brasage peuvent être réalisés pour le procédé d'assemblage par brasage conforme à l'invention. Par exemple, il est possible de maintenir une pression mécanique constante sur la nappe 4 au cours du cycle de brasage. Pour ce faire, les soufflets 5 sont pressurisés par exemple à 5 bars à température ambiante.

Puis, lorsque la température du four augmente, du gaz est retiré des soufflets 5 par les moyens de régulation et inversement, lorsque la température du four est diminuée, du gaz est introduit au sein des soufflets 5 par les moyens de régulation. Ainsi, la pression mécanique exercée par les soufflets 5 sur la nappe 4 est constante lors de l'augmentation et de la diminution de la température, en particulier lors de la phase cruciale de solidification du matériau de brasage.

En résumé, le procédé d'assemblage par brasage selon l'invention permet d'exercer une force contrôlable et pilotable :
1. à haute température et/ou ;
2. dans un four travaillant sous vide et/ou ;
3. à distance (les moyens de régulation de la pression sont situés hors du four).

D'une manière générale, le procédé d'assemblage par brasage régulant la pression mécanique exercée sur la nappe 4 depuis l'extérieur du four permet de garantir un serrage contrôlé de façon permanente sur les plaques 2 à braser, y-compris sur des assemblages de grande dimension comportant un grand nombre de plans de brasage simultanés, en utilisant une pluralité de soufflets répartis sur la plaque supérieure ou inférieure et contrôlés indépendamment les uns des autres et en prenant en compte les dilatations thermiques différentielles entre les différents matériaux.

On notera que les soufflets peuvent être tous identiques mais peuvent également être différents en ayant par exemple des dimensions différentes (i.e. au moins deux soufflets peuvent être différents au sein de la pluralité de soufflets).

Chaque soufflet peut appliquer une pression mécanique différente sur la plaque. En particulier, si la surface à braser (i.e. la surface où se trouve le matériau d'apport) n'est pas uniforme le long de la pièce, chaque soufflet (pouvant avoir des dimensions différentes des autres) pourra être pressurisé en gaz à des valeurs différentes tout au long de la procédure de brasage afin d'exercer une pression mécanique locale différente en fonction des besoins. En particulier, afin de garantir une brasure performante, le procédé selon l'invention permet d'appliquer une pression mécanique locale adéquate au niveau des deux plans adjacents de brasure entre lesquels se trouve le matériau d'apport. Cette pression locale est souvent contrainte par la tenue mécanique des matériaux à la température de brasage.

Chaque soufflet (ou au moins deux soufflets) peut exercer une pression mécanique selon des axes différents. Le procédé selon l'invention permet ainsi de réaliser le brasage d'assemblages comportant des surfaces à braser non parallèles entre elles. Ainsi, le procédé selon l'invention permet notamment de braser des pièces mécaniques complexes qui sont actuellement réalisées en plusieurs étapes (succession de brasures eutectiques étagées en températures nécessitant d'utiliser des matériaux de brasage dont la variation de composition permet de prédéfinir sa température de fusion). Le procédé selon l'invention permet de réaliser le brasage en une seule fournée grâce à l'utilisation d'une pluralité de soufflets exerçant leurs forces dans des directions distinctes.

Le procédé selon l'invention peut être utilisé pour toutes applications nécessitant une pression réglable au cours d'un cycle de brasage à haute température, ou immobilisation pour maîtriser les déformations de pièces montant fortement en température, par exemple, tout traitement thermique.

Le procédé selon l'invention peut être utilisé par exemple lors du traitement thermique de matériaux, sous vide ou atmosphère contrôlée : c'est ainsi souvent le cas lors de traitement thermique réalisé sur des plaques multi-matériaux utilisées dans des assemblages complexes avant brasage (c'est typiquement le cas de l'application décrite plus haut où les plaques sont des plaques tricouches ou bicouches à base de cuivre et d'inox). Afin de garantir une bonne accroche des matériaux fusibles composant l'eutectique de brasure, une désoxydation préalable à la brasure peut s'avérer utile. Cette désoxydation des plans de brasage est habituellement réalisée sous atmosphère contrôlée (atmosphère d'hydrogène par exemple) et à haute température (par exemple à 500°C). Grâce au procédé selon l'invention, on peut éviter la déformation incontrôlée des plaques formant l'assemblage de brasage.

Le procédé selon l'invention permet de mettre oeuvre un brasage exigeant:
- un effort de serrage réglable depuis l'extérieur, programmable tout au long de la procédure de brasage ;
- une utilisation à chaud, quelle que soit la température maximale, celle-ci étant uniquement limitée par la tenue mécanique des matériaux (contraintes et fluage) des éléments à serrer et des dispositifs pressurisés (soufflets) permettant de générer la pression locale nécessaire au moment opportun, en général au moment de la fusion du matériau de brasure (eutectique) ;
- une utilisation sous vide, sous atmosphère, ou bien encore sous une pression partielle d'un gaz quelconque (tel que l'hydrogène pour la désoxydation des pièces).

En outre, le procédé selon l'invention peut être automatisable pour des productions en série.

Par ailleurs, on notera que les différents équipements (soufflets, moyens de régulation de la pression dans la pluralité de soufflets, tirants,...) utilisés pour la mise en oeuvre du procédé selon l'invention sont parfaitement réutilisables.

Même si l'invention a été plus particulièrement décrite dans le cas d'une pression mécanique exercée par les dispositifs pressurisables sur la surface supérieure de la plaque supérieure, cette pression peut également être exercée sur la surface inférieure de la plaque inférieure ; on peut également envisager d'avoir une partie des dispositifs pressurisables disposés sur la surface supérieure de la plaque supérieure et le reste des dispositifs pressurisables disposés sur la surface inférieure de la plaque inférieure.

De même, même si l'invention a été décrite dans le cadre d'une pression exercée sur des plaques planes, le procédé selon l'invention est applicable à des systèmes ayant des surfaces plus complexes non planes (hémisphériques par exemple), la notion de plaques devant être comprise comme un élément comprenant une surface suffisante pour y disposer une pluralité de dispositifs pressurisables, chacun des dispositifs pressurisables étant aptes à exercer une pression localisée sur ladite surface.

Il est entendu que l'homme du métier est à même de réaliser différentes variantes du procédé d'assemblage par brasage selon l'invention et notamment en ce qui concerne les moyens mis en oeuvre pour réguler la pression mécanique exercée sur la nappe 4 en fonction de la température sans pour autant sortir du cadre du brevet.

A ce titre, même si l'invention s'applique préférentiellement à des soufflets, les dispositifs pressurisables 5 peuvent être des vérins, des pistons ou tout autre moyen pressurisable au moyen d'un fluide (gaz ou liquide) apte à exercer une pression mécanique sur une surface sous l'effet de sa déformation, dans un environnement haute température, régulable à distance.

Il est également entendu que les plaques 2 représentées en figure 1 sont données ici à titre d'exemple et qu'elles peuvent être formées selon toutes les combinaisons techniquement possibles :
- d'une ou de plusieurs couche(s) ;
- d'un ou de plusieurs matériau(x) ;
- d'une surface quelconque.

## Revendications

1. Procédé d'assemblage par brasage d'au moins deux plaques (2) séparées par un matériau d'apport (3) situé entre lesdites deux plaques (2), ledit procédé comportant les étapes suivantes :
- mise en place dans un four desdites deux plaques (2) séparées par ledit matériau d'apport (3) ;
- mise en compression desdites deux plaques (2) séparées par ledit matériau d'apport (3) ;
- pilotage de la température dudit four selon un cycle de brasage ;
ledit procédé étant **caractérisé en ce que** lesdites deux plaques (2) séparées par ledit matériau d'apport (3) sont mises en compression au moyen d'une pluralité de dispositifs pressurisables (5) au moyen d'un fluide, lesdits dispositifs pressurisables (5) étant localisés dans ledit four et répartis sur la surface de l'une desdites deux plaques (2) sur laquelle chaque dispositif pressurisable (5) exerce une pression mécanique, ladite pression mécanique étant régulée à distance en fonction de la température dudit four.

2. Procédé selon la revendication 1 **caractérisé en ce que** chacun desdits dispositifs pressurisables (5) est un soufflet.

3. Procédé selon l'une des revendications 1 ou 2 **caractérisé en ce que** ledit fluide est un gaz.

4. Procédé selon l'une des revendications 1 à 3 **caractérisé en ce que** ladite pression mécanique exercée sur la surface de l'une desdites deux plaques (2) par chacun desdits dispositifs pressurisables (5) est obtenue par la présence d'une quantité initiale de gaz au sein dudit dispositif pressurisable (5), la pression mécanique exercée augmentant avec la température dans ledit four et étant régulée par introduction ou retrait de gaz par rapport à ladite quantité initiale au sein dudit dispositif pressurisable (5).

5. Procédé selon l'une des revendications 1 à 4 **caractérisé en ce que** ledit cycle de brasage comporte :
∘ une augmentation de la température jusqu'à la température de brasage, ladite augmentation de température entraînant une augmentation de la pression mécanique exercée par lesdits dispositifs pressurisables (5) comportant une quantité de gaz initiale constante lors de l'augmentation de température au sein dudit four puis ;
∘ une diminution de la température, la pression mécanique exercée par lesdits dispositifs pressurisables (5) étant maintenue sensiblement constante par introduction de gaz supplémentaire au cours du refroidissement.

6. Procédé selon l'une des revendications 1 à 5 **caractérisé en ce que** ladite pression mécanique est exercée sur un empilement de plaques (2) séparées les une des autres par un matériau d'apport (3), ledit empilement comportant une plaque (2) supérieure, une plaque (2) inférieure et au moins une plaque (2) située entre ladite plaque (2) supérieure et ladite plaque (2) inférieure, ladite pression mécanique étant exercée par lesdits dispositifs pressurisables (5) sur la surface supérieure de ladite plaque (2) supérieure ou sur la surface inférieure de ladite plaque (2) inférieure.

7. Procédé selon l'une des revendications précédentes **caractérisé en ce que** ladite pression mécanique qu'exerce chaque dispositif pressurisable (5) de ladite pluralité de dispositifs pressurisables (5) est régulée de façon indépendante de la pression mécanique exercée par le ou les autres dispositifs pressurisables (5).

8. Procédé selon l'une des revendications 1 à 7 **caractérisé en ce que** chaque dispositif pressurisable (5) exerce une pression mécanique maximale sensiblement égale à 6 bars.

9. Procédé selon l'une des revendications 1 à 8 **caractérisé en ce que** lesdites deux plaques (2) séparées par ledit matériau d'apport (3) ont une surface supérieure ou égale à 500 cm² et de préférence sensiblement égale à 1000 cm².

10. Procédé selon l'une des revendications précédentes caractérisé au ce qu'au moins deux dispositifs pressurisables (5) exercent des pressions mécaniques différentes sur la surface.

11. Procédé selon l'une des revendications précédentes **caractérisé en ce qu'**au moins deux dispositifs pressurisables (5) exercent une pression mécanique sur la surface selon deux axes différents.

## Patentansprüche

1. Montageverfahren per Löten von wenigstens zwei Platten (2), die durch ein Füllgut (3) getrennt sind, das sich zwischen den genannten zwei Platten (2) befindet, wobei das genannte Verfahren die folgenden Schritte umfasst:
- Einsetzen der genannten, durch das genannte Füllgut (3) getrennten zwei Platten (2) in einen Ofen;
- Komprimieren der durch das genannte Füllgut (3) getrennten zwei Platten (2);
- Steuerung der Temperatur des genannten Ofens gemäß einem Lötzyklus;
wobei das genannte Verfahren **dadurch gekennzeichnet ist, dass** die genannten, durch das genannte Füllgut (3) getrennten zwei Platten (2) mittels einer Vielzahl von mittels eines Mediums mit Druck beaufschlagbaren Vorrichtungen (5) komprimiert werden, wobei die genannten mit Druck beaufschlagbaren Vorrichtungen (5) in dem genannten Ofen angeordnet und auf der Oberfläche einer der genannten zwei Platten (2) verteilt sind, auf der jede mit Druck beaufschlagbare Vorrichtung (5) einen mechanischen Druck ausübt, wobei der genannte mechanische Druck entfernt in Abhängigkeit von der Temperatur des genannten Ofens entfernt geregelt ist.

2. Verfahren gemäß Anspruch 1, **dadurch gekennzeichnet, dass** jede der genannten mit Druck beaufschlagbaren Vorrichtungen (5) ein Blasebalg ist.

3. Verfahren gemäß einem der Ansprüche 1 oder 2, **dadurch gekennzeichnet, dass** das genannte Medium ein Gas ist.

4. Verfahren gemäß einem der Ansprüche 1 bis 3, **dadurch gekennzeichnet, dass** der genannte, auf die Oberfläche einer der genannten zwei Platten (2) von jeder der genannten, mit Druck beaufschlagbaren Vorrichtungen (5) ausgeübte mechanische Druck durch das Vorhandensein einer anfänglichen Gasmenge innerhalb der genannten, mit Druck beaufschlagbaren Vorrichtung (5) erhalten wird, wobei der ausgeübte mechanische Druck mit der Temperatur in dem genannten Ofen steigt und per Einführen oder Entziehen von Gas im Verhältnis zu der genannten anfänglichen Menge innerhalb der genannten, mit Druck beaufschlagbaren Vorrichtung (5) geregelt ist.

5. Verfahren gemäß irgendeinem der Ansprüche 1 bis 4, **dadurch gekennzeichnet, dass** der genannte Lötzyklus umfasst:
- eine Erhöhung der Temperatur bis zu der Löttemperatur, wobei die genannte Temperaturerhöhung eine Erhöhung des von den genannten, bei der Temperaturerhöhung innerhalb des genannten Ofens eine anfängliche, konstante Gasmenge umfassenden, mit Druck beaufschlagbaren Vorrichtungen (5) ausgeübten mechanischen Drucks nach sich zieht, dann;
- eine Abnahme der Temperatur, wobei der von den genannten, mit Druck beaufschlagbaren Vorrichtungen (5) ausgeübte mechanische Druck per Einführen von zusätzlichem Gas im Verlauf des Abkühlens deutlich konstant gehalten wird.

6. Verfahren gemäß einem der Ansprüche 1 bis 5, **dadurch gekennzeichnet, dass** der genannte mechanische Druck auf einer Stapelung von Platten (2) ausgeübt wird, die durch ein Füllgut (3) voneinander getrennt sind, wobei die genannte Stapelung eine obere Platte (2), eine untere Platte (2) und wenigstens eine Platte (2) umfasst, die zwischen der genannten oberen Platte (2) und der genannten unteren Platte (2) angeordnet ist, wobei der genannte mechanische Druck durch die genannten, mit Druck beaufschlagbaren Vorrichtungen (5) auf der oberen Oberfläche der genannten oberen Platte (2) oder auf der unteren Oberfläche der genannten unteren Platte (2) ausgeübt wird.

7. Verfahren gemäß einem der voranstehenden Ansprüche, **dadurch gekennzeichnet, dass** der genannte mechanische Druck, den jede mit Druck beaufschlagbare Vorrichtung (5) der genannten Vielzahl von mit Druck beaufschlagbaren Vorrichtungen (5) ausübt, unabhängig von dem mechanischen Druck geregelt ist, der von der oder den mit Druck beaufschlagbaren Vorrichtung(en) (5) ausgeübt wird.

8. Verfahren gemäß einem der Ansprüche 1 bis 7, **dadurch gekennzeichnet, dass** jede mit Druck beaufschlagbare Vorrichtung (5) einen maximalen mechanischen Druck ausübt, der deutlich gleich 6 bar ist.

9. Verfahren gemäß einem der Ansprüche 1 bis 8 **dadurch gekennzeichnet, dass** die genannten, durch das genannte Füllgut (3) getrennten zwei Platten (2) eine Oberfläche von größer als oder gleich 500 cm² und bevorzugt deutlich gleich 1000 cm² haben.

10. Verfahren gemäß einem der voranstehenden Ansprüche, **dadurch gekennzeichnet, dass** wenigstens zwei mit Druck beaufschlagbare Vorrichtungen (5) unterschiedliche mechanische Drücke auf die Oberfläche ausüben.

11. Verfahren gemäß einem der voranstehenden Ansprüche, **dadurch gekennzeichnet, dass** wenigstens zwei mit Druck beaufschlagbare Vorrichtungen (5) einen mechanischen Druck gemäß zwei unterschiedlichen Achsen auf die Oberfläche ausüben.

## Claims

1. A method for joining by brazing at least two plates (2) separated by a filler material (3) located between said two plates (2), said method including the following steps of:
- placing in an oven said two plates (2) separated by said filler material (3);
- compressing said two plates (2) separated by said filler material (3);
- driving the temperature of said oven according to a brazing cycle;
said method being **characterised in that** said two plates (2) separated by said filler material (3) are compressed by means of a plurality of pressurisable devices (5) by means of a fluid, said pressurisable devices (5) being located in said oven and distributed on the surface of one of said two plates (2) on which each pressurisable device (5) exerts a mechanical pressure, said mechanical pressure being remotely controlled as a function of the temperature of said oven.

2. The method according to claim 1, **characterised in that** each of said pressurisable devices (5) is a bellows.

3. The method according to one of claims 1 and 2, **characterised in that** said fluid is a gas.

4. The method according to one of claims 1 to 3, **characterised in that** said mechanical pressure exerted on the surface of one of said two plates (2) by each of said pressurisable devices (5) is obtained by the presence of an initial gas amount within said pressurisable device (5), the mechanical pressure exerted increasing with the temperature in said oven and being controlled by introducing or removing gas with respect to said initial amount within said pressurisable device (5).

5. The method according to one of claims 1 to 4, **characterised in that** said brazing cycle includes:
∘ an increase in the temperature up to the brazing temperature, said increase in temperature causing an increase in the mechanical pressure exerted by said pressurisable devices (5) including a constant initial gas amount upon increasing the temperature within said oven; and then
∘ a decrease in the temperature, the mechanical pressure exerted by said pressurisable devices (5) being maintained substantially constant by introducing further gas upon cooling.

6. The method according to one of claims 1 to 5, **characterised in that** said mechanical pressure is exerted on a stack of plates (2) separated from each other by a filler material (3), said stack including an upper plate (2), a lower plate (2) and at least one plate (2) located between said upper plate (2) and said lower plate (2), said mechanical pressure being exerted by said pressurisable devices (5) on the upper surface of said upper plate (2) or on the lower surface of said lower plate (2).

7. The method according to one of the preceding claims, **characterised in that** said mechanical pressure exerted by each pressurisable device (5) of said plurality of pressurisable devices (5) is controlled independently of the mechanical pressure exerted by the other pressurisable device(s) (5).

8. The method according to one of claims 1 to 7, **characterised in that** each pressurisable device (5) exerts a maximum mechanical pressure substantially equal to 6 bar.

9. The method according to one of claims 1 to 8, **characterised in that** said two plates (2) separated by said filler material (3) have a surface area higher than or equal to 500 cm² and preferably substantially equal to 1 000 cm².

10. The method according to one of the preceding claims, **characterised in that** at least two pressurisable devices (5) exert different mechanical pressures on the surface.

11. The method according to one of the preceding claims, **characterised in that** at least two pressurisable devices (5) exert a mechanical pressure on the surface along two different axes.
